# EUROPEAN PATENT SPECIFICATION

(11) **EP 3 059 461 B1**
(45) Date of publication and mention of the grant of the patent: **26.07.2017**
(21) Application number: 16382070.7
(22) Date of filing: 22.02.2016
(51) Int. Cl.: F16C 11/02, F16C 11/04, F16B 21/00, E04F 10/06

(54) **AWNING ARM COMPRISING AN ELBOW WHICH COMPRISES TWO CAPS CONNECTED BY A CONNECTING ELEMENT**
MARKISENARM MIT EINEM MARKISENARMGELENK, DAS ZWEI DURCH EIN VERBINDUNGSELEMENT VERBUNDENE ABDECKKAPPEN AUFWEIST
UN BRAS D'AUVENT COMPRENANT UN COUDE QUI COMPREND DEUX CAPUCHONS CONNECTÉS PAR UN ÉLÉMENT DE CONNECTION

(30) Priority: 23.02.2015 ES 201530220 U
(43) Date of publication of application: 24.08.2016
(73) Proprietor: GAVIOTA SIMBAC, S.L., 03630 Sax (Alicante) (ES)
(72) Inventor: SANCHEZ, Francisco, 03630 Sax (Alicante) (ES); GUILLÉN CHICO, Francisco, 03630 Sax (Alicante) (ES)
(74) Representative: Carlos Hernando, Borja

(56) References cited:
- EP-A1- 0 125 727
- EP-A1- 1 331 322
- US-A1- 2007 051 476

## Description

### OBJECT OF THE INVENTION

The invention, an awning arm comprising an elbow with a connection system of two cover caps, relates to the integral elements of the elbow that enables the coupling of two caps to each other arranged in the elbow of an awning arm, as elements that contribute to the configuration of the elbow of an awning arm and to maintaining the components of said elbow connected to each other for a proper operation of the arm.

The field of application of this invention falls within the industrial sector dedicated to the manufacture of awnings, in particular extendable awnings, focusing specifically on the configuration and mechanisms of the articulated arms which achieve the awning extension and retraction always keeping it tight.

### BACKGROUND OF THE INVENTION

Both on the market and in the state of the art, awnings with articulated arms of the kind herein concerned are widely known, which, generally speaking, are made up of two profiles articulately joined to each other by adjacent ends, a rear end, which is joined by a proximal end to the awning case or fixed support, and another front end, joined with an elbow to the distal end of the rear profile, by its proximal end, and by its opposite or distal end to the free edge or loading bar of the awning, such that, when said awning is extended, the angle formed by said rear and front profiles is opened and, when the awning is retracted, the profiles are closed until they are almost parallel to each other. Moreover, and in order to maintain the tightness of the awning fabric, the inclusion of tightening means which tend to keep them open within the profiles is provided.

Specifically, said tightening means consist of a spring joining the proximal end of the rear profile with a chain or flexible strip which in turn is fixed to the articulation elbow between the rear profile and front profile, said strip consisting of a flat band, usually made of plastic with reinforcing metal filaments.

Document ES2074947A1 is known as an example of this kind of awnings, in which an articulated arm for a support structure for awnings of the type generally involving two tubular integral elements of an arm, joined by a central joint and passed through by a tightening means made from a flexible element, where said central joint involves two pieces, a female and male piece, each provided with two rods suitable for coupling by plugging in the ends of the arms, and where the flexible element may be of a strip or flat band type, in a plastic, gum or rubber material, integrating reinforcing metal filaments therein.

Likewise, in documents ES9601595A1, or in document WO2005/017278A1 which corresponds to the preamble of claim 1, articulated arms are described with similar solutions improved in certain aspects but consisting basically of the same principle of arms made up of profiles with an elbow which brings them together and internal tightening means comprising a spring and a textile band surrounding said elbow.

Therefore, this invention aims to provide the market with an articulated arm with innovative improvements in the configuration thereof that provide advantages with regards to construction, safety and space optimization.

Specifically, one of the improvements provided by this invention refers to the configuration of the profiles that make up the arms in order to contribute to a better coupling between both in its closed position, thus achieving a compact element due to a supplementary design thereof in which space is also optimized.

Another improvement provided by the invention is directly related to safety, with regards to preventing possible risks due to the tightening means breaking, which is especially susceptible to occurring before the assembly of the arms, during the storing thereof in the workshop and, especially, during transportation and installation operations since, when they are handled, said means may break and, if the end of the arm is not properly secured, they may shoot out through said end causing unwanted damages.

Finally, a third aspect that improves this invention is the inclusion of appropriate means to achieve the incorporation of metal cover caps, that correspond to the material of the profiles, usually aluminum, avoiding the use of plastic in tabs and cover caps, especially in the elbow area which, with the passing of time and use, deteriorate the assembly as they get damaged more quickly.

It also should be noted that, at least on the part of the applicant, the existence of another arm for an awning or a similar invention presenting technical or structural characteristics like the ones the arm has, subject matter of this invention, is not known.

### DESCRIPTION OF THE INVENTION

The subject matter of the present invention is an awning arm according to claim 1. The caps of the awning arm comprise a circular base and a rod centered and perpendicularly joined in said base, said rod having a gap at its free end.

To join or connect the two caps, each spindle of the connection element is inserted in the gap of each rod, said spindles being retained inside the gap due to retention means arranged in the spindles. Said retention means are preferably projections arranged on the surface of said spindles, for example rings, which increase the thickness of the spindle, causing the housing thereof inside the gap of the rod by pressure when said projections become deformed.

The awning arm is usually made up of two profiles, a rear profile and a front profile, joined at its adjacent ends by an articulated elbow, with a male piece and female piece, and, respectively, to the awning case with a rear terminal in the case of the rear profile, and to the distal edge of the awning by a front terminal at the front profile, incorporating tightening means, which tend to maintain the profiles open, inside the rear profile. Said tightening means, or tightening group, which is not the subject matter of the present invention, usually comprise at least a spring, a flexible strip or band, a hook and a pin.

As mentioned before, both profiles are joined in an elbow formed by a male piece and a female piece, the latter having two opposite bases that clamp the male piece, and each male and female piece being joined to one of the profiles of the awning arm. Said male and female pieces comprise a through hole that, when coupled, determine a housing to receive a hollow cylinder that determines the shaft with respect to which the arm profiles rotate.

Said hollow cylinder comprises a through hole that passes through the cylinder in order to be fastened by means of a screw to the male piece of the elbow, which also comprises a through hole precisely for the insertion of said screw by threading and to fasten the hollow cylinder thereto.

To assemble the elbow of an awning arm with a connection system of two caps, the two parts, male and female that make up the elbow, are coupled, joining the two arm profiles, such that once they are coupled, they determine the housing where the hollow cylinder is inserted. Said hollow cylinder comprises slots in its upper and lower ends that enable the through hole arranged on the cylinder surface to be aligned with the through hole in the male piece. The slots of the hollow cylinder are aligned with marks arranged on the bases of the female piece such that, when said slots are aligned with the marks, the alignment of the cylinder hole with the hole of the male piece of the elbow is achieved. Once aligned, a screw is inserted through the hole of the male piece of the elbow until the screw is inserted in the hole arranged in the wall of the hollow cylinder but without passing through it. In this way, the male piece and the female piece of the elbow of an awning arm are fastened to each other, enabling the rotation with respect to one another due to the hollow cylinder which acts as a rotating shaft.

Thereafter, that hollow cylinder must be closed both to avoid dirt entering therein and to improve the appearance of the awning arm. To that end, the rod of one of the cover caps is inserted through one of the ends of the cylinder and the rod of the other cap, in the end gap of which one of the spindles of the connection element has previously been inserted, is inserted through the opposite end. Once inside the cylinder, the free spindle of the connection element is forced to insert itself in the gap of the rod of the opposite cap, both caps thus being fastened in the hollow cylinder. In order to fix the position of the connection element inside the cylinder and prevent it from moving inside said cylinder, and therefore, to fix the position of the caps in the assembly, the screw that had been partially inserted in the cylinder is tightened to pass through the wall of said cylinder, the screw tip being housed between the two cones joined by its vertex determining the central body of the connection element. Said screw prevents the cylinder and, thus the rotating shaft of the assembly, from moving both longitudinally and rotationally.

### DESCRIPTION OF THE DRAWINGS

In order to complete the description of the present invention and to contribute to a better understanding of the characteristics thereof, this specification includes, as an integral part thereof, a set of plans which, without limitation, represent a preferred embodiment of the invention.
Figure 1 shows a perspective view of an awning arm according to the invention, represented in a closed position, in which the main parts and elements that it comprises may be seen.
Figure 2 shows a perspective view of the male piece and female piece of the elbow, together with profiles coupled to said male and female pieces, as well as the hollow cylinder before being inserted in the housing determined by the male and female pieces of the elbow.
Figure 3 shows a top view of one of the bases of the female piece.
Figure 4 shows the cover caps before being mounted in the elbow of an awning arm.
Figure 5 shows the connection element of the two cover caps.
Figure 6 shows the elbow with the connection system already installed.
Figure 7 shows a cross-section of an elbow in which the different coupled components may be seen.
Figure 8 shows another cross-section of an elbow in which the coupled components may be seen.

### PREFERRED EMBODIMENT OF THE INVENTION

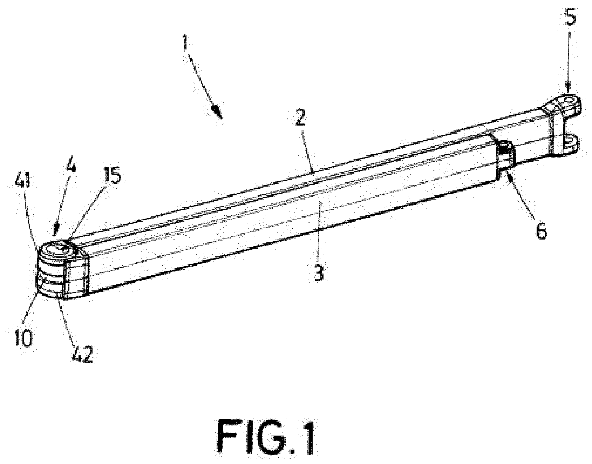

As seen in Figure 1, the arm 1 at hand is configured from two profiles, a rear profile 2 and a front profile 3, which are articulately joined to each other by an elbow 4 made up of a male piece 42 and a female piece 41, and to which a rear terminal 5 for fastening to the awning case and a front terminal 6 for fastening at the distal edge of the awning are coupled, respectively and at its opposite ends.

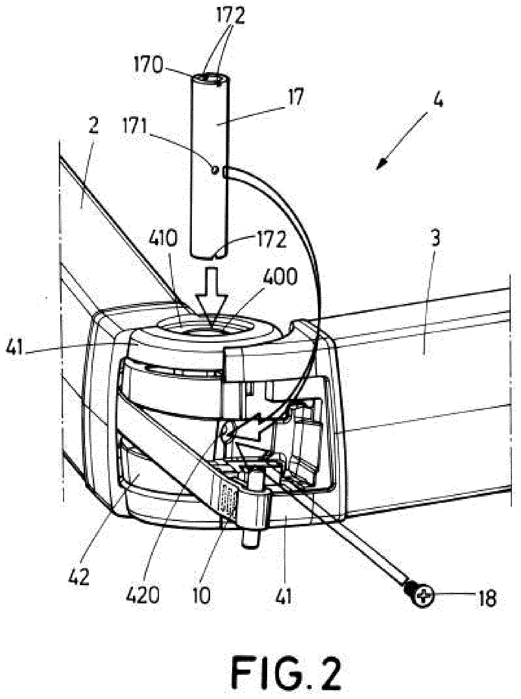

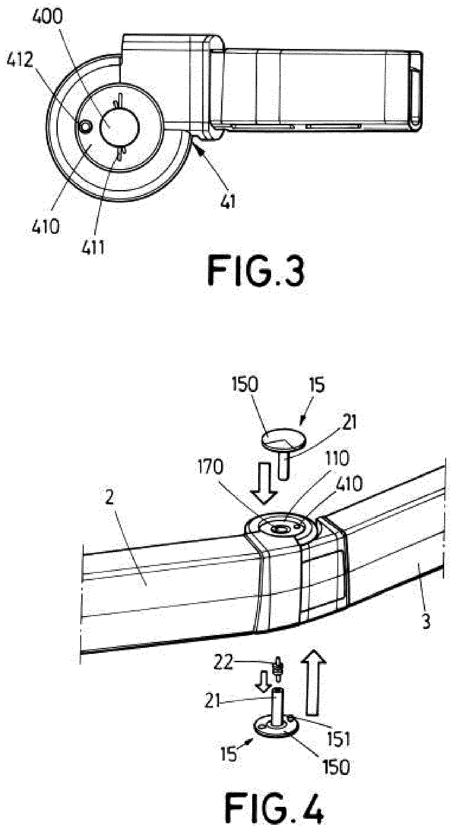

Figure 2 shows the arm elbow 4 and the components thereof once the male piece 42 and the female piece 41 have been coupled making up the elbow as well as the housing 400 between them. In said housing 400 a hollow cylinder 17 is inserted. Said cylinder comprises slots 172 in the ends thereof and a through hole 171 that communicates the outside of the cylinder 17 with the inside 170 thereof. The position between the male piece 42 and the female piece 41 is ensured by the insertion of a self-tapping screw 18 through the male piece 42, specifically through a hole 420 connecting the outside of the elbow 4 with the housing 400 of the elbow 4, which will be inserted in the hole 171 of the hollow cylinder 17, but without passing through it. In order to make the hole 171 of the hollow cylinder 17 coincide with the hole 420 of the elbow 4, the slots 172 arranged at the upper and lower ends of the cylinder 17 are aligned with marks 411 made for that purpose on the bases 410 of the female piece 41. Said bases 410 of the female piece 41 also comprise, as may be seen in Figure 3, a housing or depression 412 as well as the marks 411.

After inserting the cylinder 17 in the housing 400 of the elbow 4, securing the rotation of the male piece 42 and female piece 41 with respect to the shaft of the cylinder 17, and by extension of the rear profile 2 and front profile 3 of the arm 1, said housing 400 must be covered in order to prevent dirt and water from entering and accumulating in the housing, and to improve the appearance of the assembly.

In order to cover the ends of the housing 400 of the elbow 4, two caps 15 formed by a preferably circular base 150 and a rod 21 perpendicular to said base 150 and centered with respect to the same are employed. Said rod comprises a gap 210 at its free end to house a connection element 22 intended to join the two caps 15, specifically the two rods 21 to each other in the inside 170 of the hollow cylinder 17. The base 150 of the caps 15 is housed in the base 410 of the female piece 41 which has a small recess which coincides with the thickness of the base 150 of the cap 15. Likewise, the base 150 of the cap 15 has a protrusion 151 in the side of the rod intended to be inserted in the coupling with the female piece 41 in the housing 412 arranged on the base 410 of the male piece 41.

Said connection element 22 comprises a diabolo-shaped central body 220, that is, two cones 223 joined by its vertex, and with two bases 224 of the cones 223 opposite and parallel to each other, and a spindle 221 placed on each base 224 of the cone 223 perpendicular to said base 224 of the cone 223. Said spindles 221 comprise retention means 222 on the surface thereof to enable the fastening of the spindle 221 and, therefore of the connection element 22, to the gap 210 of the rod 21 and, therefore, to the cap 15. Said retention means 222 of the spindle 221 are preferably projections on the surface which increases the spindle thickness 221 for its insertion by pressure, deforming said projections 222 in the inside of the gap 210 of the rod 21. Said projections 222 may be rings separated between each other and concentric with the shaft of spindle 221.

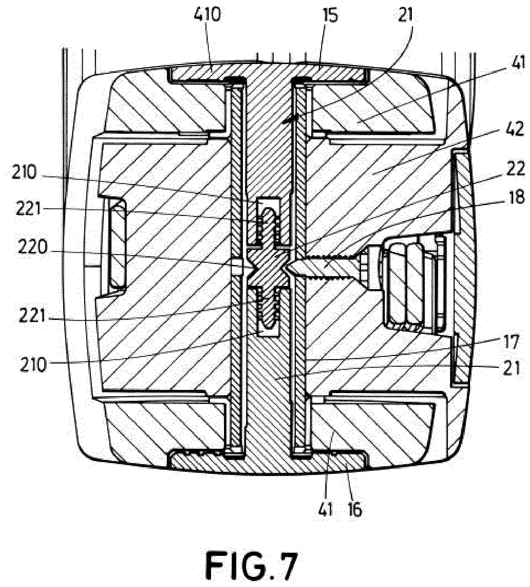

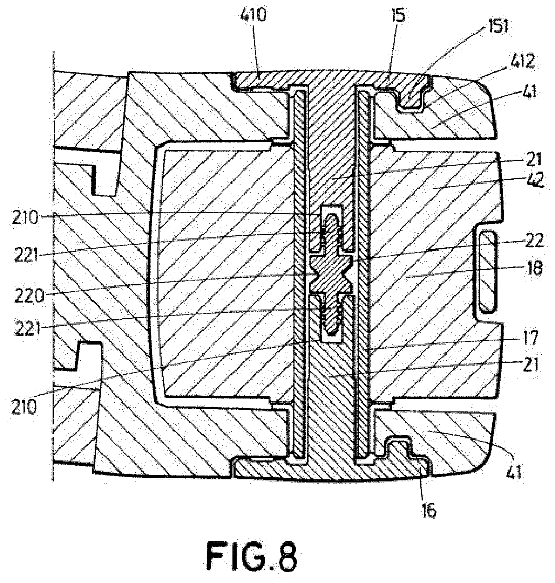

Therefore, in order to cover the housing 400 of the elbow as shown in Figure 4, the spindle 221 of the connection element 22 is inserted in the rod 21 of one of the caps 15 and subsequently the assembly is inserted in the inside 170 of the hollow cylinder 17 through an end. Thereafter the other or second cap 15 is inserted through the opposite end of the hollow cylinder 17 such that the spindle 221 free of the connection element 22 is inserted in the rod 21 of the second cap 15. In order to prevent the rotation, anti-rotation positioner, of the caps 15 on the base 410 of the female piece 41, the protrusions 151 of the bases 150 of the caps 15 are arranged to coincide with housings 412 of the bases 410 of the female piece 41, as observed in Figure 8. In order to adjust the position of the connection element 22 in the inside 170 of the hollow cylinder 17, the self-tapping screw 18 is further tightened such that it now does pass through the wall of the hollow cylinder 17, such that the tip of said self-tapping screw 18 is located between the two opposite conical surfaces 223 that form the central body 220 of the connection element 22, as seen in Figure 7.

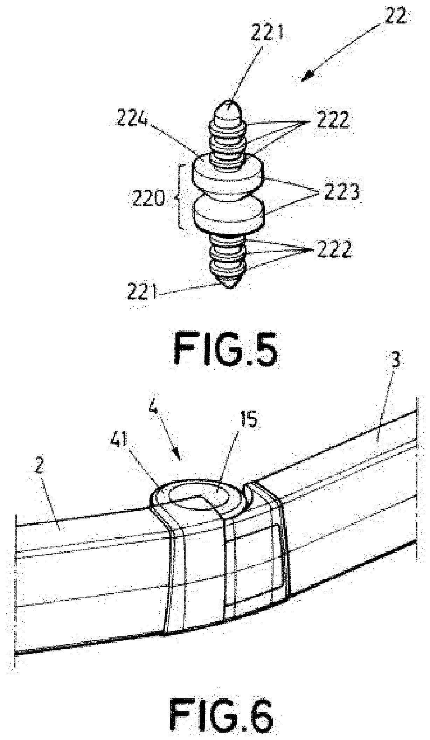

Figure 6 shows the appearance of the caps 15 already installed in the elbow 4, covering the housing 400 of said elbow 4.

## Claims

1. An awning arm (1) comprising an elbow (14) which comprises two caps (15) and, between said caps (15), a connection element (22) connecting said caps (15), **characterized in that** the connection element comprises:
- A central body (220) formed by a diabolo, that is, two cones (223) linked by its vertex, with the bases (224) of the cones (223) opposite, and
- A spindle (221) placed in each base (224) perpendicularly thereto.

2. The awning arm, according to claim 1, **characterized in that** the caps (15) have a circular base (150) and a rod (21) centered and perpendicularly joined in said circular base (150), said rod (21) comprising a gap (210) at its free end.

3. The awning arm, according to previous claims, **characterized in that** the spindles (221) comprise retention means (222) on the surface thereof in order to be connected to the caps (15).

4. The awning arm, according to previous claims, **characterized in that** it comprises a male piece (42) and a female piece (41), the latter with two opposite bases (410) between which the male piece (42) is inserted, a housing (400) being determined between both pieces (41, 42) which receives a hollow cylinder (17).

5. The awning arm, according to the previous claims, **characterized in that** the rods (21) are housed in the inside (170) of the hollow cylinder (17) through the ends thereof, coupled to each other by means of the connection element (22).

6. The awning arm, according to claim 5, **characterized in that** the spindles (221) of the connection element (22) are inserted in the gap (210) of the rods (21).

7. The awning arm, according to claim 3, **characterized in that** the retention means (222) are projections on the surface of said spindles (221) increasing the thickness thereof.

8. The awning, according to claim 4, **characterized in that** the hollow cylinder (170) comprises slots (172) in its ends that, in an assembly position in the elbow (4), are aligned with marks (411) arranged in each base (410) of the female piece (41).

9. The awning, according to the previous claims, **characterized in that** the circular base (150) of the cap (15) comprises, on the side where the rod (21) is located, a protrusion (151) that, in an assembly position on the base (410) of the female piece (41) of the elbow (4), is inserted in a housing (412) arranged in said base (410) of the female piece (41) as an anti-rotation positioner.

10. The awning, according to the previous claims, **characterized in that** the hollow cylinder (17) comprises a through hole (171) on its surface that, in an assembly position in the elbow (4), is aligned with a through hole (420) in the male piece (42) of the elbow (4) for the insertion of a screw (18), the tip of said screw (18) being inserted between the two cones (223) of the central body (220) of the connection element (22).

## Patentansprüche

1. Markisenarm (1), der eine Krümmung (14) umfasst, welche zwei Kappen (15) umfasst, und wobei zwischen den Kappen (15) ein Verbindungselement (22) die Kappen (15) verbindet, **dadurch gekennzeichnet, dass** das Verbindungselement Folgendes umfasst:
- einen zentralen Körper (220), der aus einem Diabolo, d. h., zwei Kegeln (223), die durch ihren Scheitelpunkt verknüpft sind, wobei die Böden (224) der Kegel (223) entgegengesetzt sind, gebildet ist, und
- eine Spindel (221), die in jedem Boden (224) senkrecht dazu platziert ist.

2. Markisenarm nach Anspruch 1, **dadurch gekennzeichnet, dass** die Kappen (15) einen kreisförmigen Boden (150) und eine Stange (21), die zentriert und senkrecht in dem kreisförmigen Boden (150) angebunden ist, aufweisen, wobei die Stange (21) eine Lücke (210) an ihrem freien Ende umfasst.

3. Markisenarm nach den vorherigen Ansprüchen, **dadurch gekennzeichnet, dass** die Spindeln (221) Rückhaltemittel (222) auf der Oberfläche davon umfassen, um mit den Kappen (15) verbunden zu werden.

4. Markisenarm nach den vorherigen Ansprüchen, **dadurch gekennzeichnet, dass** er ein Steckelement (42) und ein aufnehmendes Element (41) umfasst, wobei letzteres zwei entgegengesetzte Böden (410) aufweist, zwischen welchen das Steckelement (42) eingeführt ist, wobei ein Gehäuse (400) zwischen beiden Elementen (41, 42) bestimmt ist, welches einen Hohlzylinder (17) aufnimmt.

5. Markisenarm nach den vorherigen Ansprüchen, **dadurch gekennzeichnet, dass** die Stangen (21) im Inneren (170) des Hohlzylinders (17) durch die Enden davon aufgenommen sind, die durch das Verbindungselement (22) miteinander gekoppelt sind.

6. Markisenarm nach Anspruch 5, **dadurch gekennzeichnet, dass** die Spindeln (221) des Verbindungselements (22) in die Lücke (210) der Stangen (21) eingeführt sind.

7. Markisenarm nach Anspruch 3, **dadurch gekennzeichnet, dass** die Rückhaltemittel (222) Vorsprünge auf der Oberfläche der Spindeln (221) sind, die die Dicke davon vergrößern.

8. Markise nach Anspruch 4, **dadurch gekennzeichnet, dass** der Hohlzylinder (170) Schlitze (172) an seinen Enden umfasst, die in einer Montagestellung in der Krümmung (4) mit Markierungen (411) fluchten, die in jedem Boden (410) des aufnehmenden Elements (41) angeordnet sind.

9. Markise nach den vorherigen Ansprüchen, **dadurch gekennzeichnet, dass** der kreisförmige Boden (150) der Kappe (15) auf der Seite, wo die Stange (21) liegt, einen Vorsprung (151) umfasst, der in einer Montagestellung auf dem Boden (410) des aufnehmenden Elements (41) der Krümmung (4) in ein Gehäuse (412) eingeführt ist, das in dem Boden (410) des aufnehmenden Elements (41) als Drehsicherungspositionierungselement angeordnet ist.

10. Markise nach den vorherigen Ansprüchen, **dadurch gekennzeichnet, dass** der Hohlzylinder (17) eine Durchgangsbohrung (171) auf seiner Oberfläche umfasst, die in einer Montagestellung in der Krümmung (4) mit einer Durchgangsbohrung (420) in dem Steckelement (42) der Krümmung (4) zum Einführen einer Schraube (18) fluchtet, wobei die Spitze der Schraube (18) zwischen den beiden Kegeln (223) des zentralen Körpers (220) des Verbindungselements (22) eingeführt ist.

## Revendications

1. Bras de store (1) comprenant un coude (14) qui comprend deux embouts (15) et, entre lesdits embouts (15), un élément de raccordement (22) raccordant lesdits embouts (15), **caractérisé en ce que** l'élément de raccordement comprend :
- Un corps central (220) formé par un diabolo, à savoir, deux cônes (223) reliés par leur sommet, avec les bases (224) des cônes (223) opposées, et
- Un axe (221) placé dans chaque base (224) perpendiculairement à celle-ci.

2. Bras de store,
selon la revendication 1, **caractérisé en ce que** les embouts (15) ont une base circulaire (150) et une tige (21) centrée et perpendiculairement unie à ladite base circulaire (150), ladite tige (21) comprenant une ouverture (210) à son extrémité libre.

3. Bras de store,
selon les revendications précédentes, **caractérisé en ce que** les axes (221) comprennent des moyens de retenue (222) sur leur surface afin d'être raccordés aux embouts (15).

4. Bras de store,
selon les revendications précédentes, **caractérisé en ce qu'**il comprend une pièce mâle (42) et une pièce femelle (41), cette dernière avec deux bases opposées (410) entre lesquelles la pièce mâle (42) est insérée, un logement (400) étant déterminé entre les deux pièces (41, 42) qui reçoit un cylindre creux (17).

5. Bras de store,
selon les revendications précédentes, **caractérisé en ce que** les tiges (21) sont logées à l'intérieur (170) du cylindre creux (17) par leurs extrémités, accouplées entre elles au moyen de l'élément de raccordement (22).

6. Bras de store,
selon la revendication 5, **caractérisé en ce que** les axes (221) de l'élément de raccordement (22) sont insérés dans l'ouverture (210) des tiges (21).

7. Bras de store,
selon la revendication 3, **caractérisé en ce que** les moyens de retenue (222) sont des saillies sur la surface desdits axes (221) augmentant son épaisseur.

8. Store,
selon la revendication 4, **caractérisé en ce que** le cylindre creux (170) comprend des rainures (172) à ses extrémités qui, dans une position d'assemblage dans le coude (4), sont alignées avec des marques (411) disposées dans chaque base (410) de la pièce femelle (41).

9. Store,
selon les revendications précédentes, **caractérisé en ce que** la base circulaire (150) de l'embout (15) comprend, sur le côté où la tige (21) est située, une protubérance (151) qui, dans une position d'assemblage sur la base (410) de la pièce femelle (41) du coude (4), est insérée dans un logement (412) disposé dans ladite base (410) de la pièce femelle (41) à la manière d'un positionneur anti-rotation.

10. Store,
selon les revendications précédentes, **caractérisé en ce que** le cylindre creux (17) comprend un orifice traversant (171) sur sa surface qui, dans une position d'assemblage dans le coude (4), est aligné avec un orifice traversant (420) dans la pièce mâle (42) du coude (4) pour l'insertion d'une vis (18), la pointe de ladite vis (18) étant insérée entre les deux cônes (223) du corps central (220) de l'élément de raccordement (22).
